# EUROPÄISCHE PATENTSCHRIFT

(11) **EP 2 424 923 B1**
(45) Veröffentlichungstag und Bekanntmachung des Hinweises auf die Patenterteilung: **03.04.2013**
(21) Anmeldenummer: 10720730.0
(22) Anmeldetag: 30.04.2010
(51) Int. Cl.: C08G 77/26, C09D 183/08, C25D 13/02

(54) **VERFAHREN ZUR HERSTELLUNG EINES BINDEMITTELS ZUR BESCHICHTUNG LEITFÄHIGER OBERFLÄCHEN**
METHOD FOR THE PRODUCTION OF A BINDER FOR COATING CONDUCTIVE SURFACES
PROCÉDÉ DE PRÉPARATION D'UN LIANT DESTINÉ À REVÊTIR DES SURFACES CONDUCTRICES

(30) Priorität: 30.04.2009 DE 102009019329
(43) Veröffentlichungstag der Anmeldung: 07.03.2012
(73) Patentinhaber: EWALD DÖRKEN AG, 58313 Herdecke (DE)
(72) Erfinder: KRUSE, Thomas, 44229 Dortmund (DE); FOBBE, Helmut, 58638 Iserlohn (DE); REUSMANN, Gerhard, 45259 Essen (DE)
(74) Vertreter: Kalkoff & Partner
(86) Internationale Anmeldenummer: PCT/EP2010/055900
(87) Internationale Veröffentlichungsnummer: WO 2010/125180

(56) Entgegenhaltungen:
- WO-A1-2008/088492
- WO-A2-2005/010076

## Beschreibung

Die Erfindung betrifft ein Verfahren zur Herstellung eines Bindemittels für die Beschichtung leitfähiger Oberflächen.

Zu den typischen Beschichtungsmitteln für leitfähige Oberflächen, wie sie z. B. zur Herstellung von Beschichtungen auf Werkstücken für die Automobilindustrie eingesetzt werden, zählen flüssige Beschichtungsmittel, die mindestens ein Bindemittel enthalten, das in wässriger, neutralisierter Form leitfähig ist. Diese Beschichtungsmittel werden für die Verfahren der kathodischen Tauchlackierung (KTL-Verfahren) eingesetzt. Werkstücke mit leitfähigen, meist mit metallischen Oberflächen, werden in Tauchbäder mit dem flüssigen, leitfähigen Beschichtungsmittel hineingegeben. Die Werkstücke sind als Kathode geschaltet, räumlich getrennt davon sind Anoden im Tauchbad angeordnet. Es wird eine Spannung angelegt, das Beschichtungsmittel scheidet sich an der Kathode, also auf der Oberfläche des zu beschichtenden Werkstücks ab. Es handelt sich meist um metallische Werkstücke, es können aber auch nicht-metallische Werkstücke sein, die mit einer leitfähigen Oberfläche versehen sind. Nachdem die Beschichtung aufgebaut ist, wird das Werkstück aus dem Tauchbad entfernt. Bekannte Beschichtungen, die auf diese Weise im KTL-Verfahren aufgetragen werden können, basieren auf Beschichtungsmitteln mit Kohlenstoff als wesentlichem Bestandteil der Verbindungen, durch die das Netzwerk aufgebaut wird, das die Beschichtung bildet. Die Eigenschaften der Beschichtungen sind also durch auf Kohlenstoff basierende Netzwerke vorgegeben.

Ebenfalls bekannt sind sogenannte Sol-Gel-Beschichtungsverfahren. Hierbei werden hydrolysierbare metallorganische Verbindungen meist mit wenig Wasser kontrolliert zur Reaktion gebracht. Kontrollierte Reaktion bedeutet, dass der Vorgang nicht durch Ausfällung von unlöslichen Endprodukten (z. B. Siliziumdioxid) beendet wird, sondern, dass er vorher zum Stillstand kommt. Es bildet sich ein Sol, also eine kolloidale Lösung, die Zwischenprodukte in Form nanoskaliger Einheiten enthält. Als Edukte dienen Chloride und vorzugsweise Alkoxide, meist der Elemente Silizium, Titan, Zirkonium, Aluminium oder Zink. Beschichtet wird durch Aufbringen des Sols, also der vorbeschriebenen Ausgangsverbindung in Wasser oder Lösungsmittel kolloidal gelöst. Meist wird das Werkstück in das Sol getaucht. Die Gelbildung und die anschließende Vernetzung, durch die die eigentliche, voll funktionsfähige Schutzschicht ausgebildet wird, erfolgt beim Entfernen des Lösungsmittels (z. B. durch Abdampfen oder Trocknen) und beim nachfolgenden Einbrennen. Die große Empfindlichkeit des Sols gegenüber Wasser, das eine weitere, unerwünschte Hydrolyse auslöst, schränken den Einsatz dieses Verfahrens in der Praxis jedoch ein.

Die DE-PS 36 13 384 (Wacker) offenbart ein Verfahren zur Herstellung eines leitfähigen Bindemittels. Zur Herstellung des Bindemittels werden jedoch chlorhaltige Verbindungen eingesetzt, die sowohl in der Verarbeitung der Ausgangssubstanzen problematisch als auch in der Verwendung eingeschränkt sind. Zudem können nur sehr dicke Beschichtungen erzeugt werden. Die Anforderung an die Beschichtung maßhaltiger Bauteile erfordern aber in der Regel eine Schichtstärke, d. h., einen Trockenfilm von unter 50 µm voraus.

Die WO 2008/088492 offenbart ein Verfahren zum Herstellen eines Bindemittels aus Methylsilanen unter Einbeziehung eines Aminomethylsilans.

Es besteht daher Bedarf an Beschichtungen, die auf leitfähigen Oberflächen abgeschieden werden können und an Beschichtungsmitteln, deren Eigenschaften nicht dadurch eingeschränkt wird, dass Kohlenstoff deren wichtigstes oder zentrales Bindungsatom ist. Es ist daher Aufgabe der Erfindung, ein Beschichtungsmittel bereitzustellen und eine Beschichtung vorauschlagen, die auf leitfähigen Oberflächen elektrolytisch aus Tauchbädern mit einer Trockenfilmstärke von unter 50 µm abgeschieden werden kann und deren wichtigstes oder zentrales Bindungsatom nicht Kohlenstoff ist.

Diese Aufgabe wird gelöst mit einem Verfahren nach Anspruch 1 und mit einem Bindemittel nach Anspruch 9. Erfindungsgemäß wird eine Siloxan-Verbindung vorgeschlagen, die eine Amino-Gruppe enthält. Die Siloxan-Verbindung ist chlorfrei. Durch die Amino-Gruppe entsteht in der Siloxan-Verbindung nach Neutralisation in wässriger Lösung ausreichend Ladung, so dass das Bindemittel ohne weiteres zum Beispiel in einem kathodischen Tauchbad auf metallischen Oberflächen abgeschieden werden kann. Ein typischer Anwendungsfall für das erfindungsgemäße Bindemittel ist das Abscheiden einer Versiegelung (eines Topcoats) auf einer leitfähigen oder metallischen Oberfläche eines Werkstücks. Die Bindung, die bestimmend ist für den Aufbau des polymeren Netzwerks, ist erfindungsgemäß eine auf einem Siliziumatom basierende Bindung, meist eine Si-O-Bindung. Dieser Bindungstyp bzw. das darauf aufbauende Netzwerk weist andere Eigenschaften auf als ein auf Kohlenstoff-Bindungen basierendes Netzwerk. Entsprechend unterschiedliche Eigenschaften haben die aus dem erfindungsgemäßen Beschichtungsmittel hergestellten Beschichtungen.

Die Synthese erfindungsgemäßer Bindemittel erfolgt in Analogie zur folgenden Reaktionsgleichung:

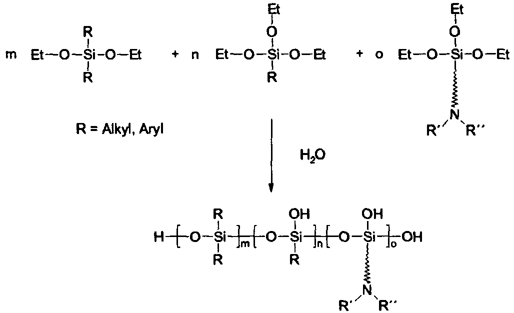

Typisch kann auch folgende Darstellung gewählt werden: 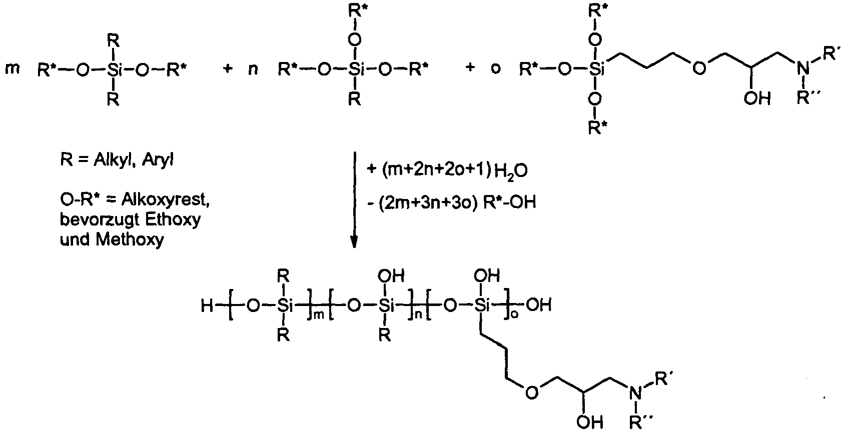 dabei ist
- R: Alkyl- oder Arylreste, z. B. eine Methyl- oder Phenylgruppe
- R' und R": Alkylreste
- Et: Ethylrest
- O - R*: Alkoxyrest, bevorzugt Ethoxy- oder Methoxyrest
- m: einen Wert von 3 bis 6, bevorzugt einen Wert von 4 bis 5
- n: einen Wert von 3 bis 6, bevorzugt einen Wert von 4 bis 5
- o: einen Wert von 1 bis 3, bevorzugt einen Wert von 1 bis 2

Für eine bevorzugte erfindungsgemäße Siloxanverbindung mit einem Molgewicht von ca. 1300 g/mol können Werte angenommen werden, die für m = 4,7, n = 4,5 und o = 1,2 betragen.

Die erfindungsgemäße Siloxanverbindung für die Beschichtung leitfähiger Oberflächen wird hergestellt mit den Schritten: Bereitstellen einer Mischung aus mindestens fünf Alkoxysilanen, darunter mindestens zwei Methylalkoxysilanen, mindestens zwei Phenylalkoxysilanen und mindestens einem Aminoalkoxysilan, wobei Methylalkoxysilane und Phenylalkoxysilane in einem Molverhältnis von 1,5 : 1 bis 2 : 1 eingesetzt werden und wobei Phenylalkoxysilane und Aminoalkoxysilan in einem Molverhältnis von 1 : 0,20 bis 1 : 0,50 eingesetzt werden, und das Hydrolysieren der Silane unter Zusatz von Wasser in einem Molverhältnis von Wasser zu Phenylalkoxysilan von 1 : 0,075 bis 1 : 0,15 erfolgt.

Das Molverhältnis von Methylalkoxysilanen zu Phenylalkoxysilanen wird vorzugsweise in einem Bereich von 1,5 : 1 bis 1,7: 1 eingestellt, bevorzugt in einem Bereich von 1,55 : 1 bis 1,65 : 1. Das Molverhältnis von Methylalkoxysilanen zu Phenylalkoxysilanen bestimmt -zusammen mit dem zugesetzten Wasser- wesentlich das Molgewicht der erfindungsgemäßen Siloxanverbindung.

Geeignet sind Alkoxysilane der allgemeinen Form R₂Si(OR')₂ und RSi(OR')₃ mit R = Methyl- oder Phenylrest sowie R'= Methyl- oder Ethylrest. Diese können zunächst beliebig miteinander gemischt werden, da sie in der Regel ineinander löslich sind.

Das Molverhältnis von Phenylalkoxysilan zu Aminoalkoxysilan wird in einem Bereich von 1 : 0,20 bis 1 : 0,50, bevorzugt von 1 : 0,30 bis 1 : 0,40 eingestellt. Das Aminoalkoxysilan ist wesentlich für die Erfindung. Durch das Aminoalkoxysilan wird (nach Neutralisation mit Säure in wässriger Lösung) die zum kathodischen Abscheiden erforderliche Ladung in dem Siloxan-Molekül aufgebaut. Das Aminoalkoxysilan ist ein Addukt aus einem Amin, das mit einem epoxygruppenhaltigen Alkoxysilan umgesetzt wird. Geeignete Amine, die zusammen mit einem epoxygruppenhaltigen Alkoxysilan ein Addukt (Aminoalkoxysilan) bilden können, sind unter anderem: ein Ketimin aus Diethylentriamin und Methylisobutylketon, N-Methylethanolamin, eine Mischung des vorgenannten Ketimins (25%) und des N-Methylethanolamins (75%), Morpholin, Di-n-propylamin, Diisopropylamin, N-Ethylethanolamin, und N-Butylethanolamin. Als Alkoxysilan kann z. B. gemäß der vorstehenden Strukturformel 3 Gylcidyloxypropyltriethoxysilan (Handelsname z. B.: GLYEO), aber auch 3 Glycidyloxypropyltrimethoxysilan eingesetzt werden.

Wasser wird nach der Erfindung in einem Molverhältnis von 1 : 0,075 bis 1 : 0,15 Wasser zu Phenylalkoxysilan zugesetzt. Bevorzugt wird ein Molverhältnis von 1 : 0,105 bis 1 : 0,125, besonders bevorzugt von 1: 0,110 bis 1: 0,120 eingestellt, um ein flüssiges, reaktives und mit ausreichender Ladung versehenes Bindemittel bereitzustellen. Zur Herstellung des erfindungsgemäßen Siloxans ist es vorteilhaft, zunächst die Silane zu mischen und dann das Wasser über einen Zeitraum von z. B. 5 Minuten bis 60 Minuten gleichmäßig verteilt zuzugeben. Das erfindungsgemäße Verfahren zeichnet sich dadurch aus, dass mit -verglichen mit dem Stand der Technik- sehr geringem Einsatz von Wasser gearbeitet wird. Die so gemischten Komponenten, Wasser und Silane, sieden nach Zugeben des Wassers für mindestens 60 Minuten, bevorzugt mindestens 120 Minuten, besonders bevorzugt mindestens 150 Minuten, vorteilhaft mindestens 180 Minuten.

Das vorgenannte Verhältnis aus Methylalkoxysilanen und Phenylalkoxysilanen gewährleistet nach der Hydrolyse die Einstellung eines Molgewichts, das ein flüssiges Bindemittel ergibt. Bevorzugt liegt das Molgewicht bei ca. 1. 000 g/mol bis ca. 2.000 g/mol, bevorzugt bei ca. 1.100 g/mol bis ca. 1.600 g/mol, vorteilhaft bei ca. 1.200 g/mol bis ca. 1.400 g/mol. Bei diesem Molgewicht stellt sich eine Viskosität des Bindemittels ein, die für ein daraus hergestelltes Beschichtungsmittel gute Verarbeitungseigenschaften bietet (Fließ- und Auftragsverhalten, Filmbildung).

Nach der Hydrolyse wird nach einer bevorzugten Ausführung der Erfindung das während der Hydrolyse entstandene Alkohol, meist Ethanol oder Methanol, mindestens weitgehend entfernt. Dadurch kann das erfindungsgemäße Bindemittel verarbeitet werden, ohne dass in der Umgebung des Tauchbads nennenswerte Mengen Lösungsmittel freigesetzt werden. Das Bindemittel nach der Erfindung kann ohne weiteres noch bis zu 20 Gewichts-% Alkohol enthalten, bevorzugt bis zu 10 Gewichts-%, vorzugsweise enthält es 5 Gewichts-% oder weniger (bis zur Nachweisgrenze).

Um die für das Bindemittel und ein daraus herzustellendes Beschichtungsmittel die erforderliche elektrische Leitfähigkeit bzw. Ladung in dem erfindungsgemäßen Siloxan aufzubauen, ist es erforderlich, dass das Siloxan nach der Hydrolyse neutralisiert wird. Zu diesem Zweck wird der Lösung bzw. Dispersion Säure zugesetzt. Geeignet sind organische und anorganische Säuren, beispielsweise Salzsäure, Schwefelsäure oder Essigsäure. Ein neutralisiertes Bindemittel weist zudem eine bessere Lagerstabilität auf.

Eine erfindungsgemäß hergestellte Siloxan-Verbindung, also das Bindemittel, ist im Gebrauchszustand flüssig, lagerstabil und farblos. Sie zeigt keine Vergilbungsneigung. Da keine Vergilbungsneigung vorliegt, können auch weiße oder helle Beschichtungen erzeugt werden. Die an sich transparente Siloxan-Verbindung kann ohne weiteres eingefärbt werden mit bekannten Farbstoffen und/oder Pigmenten.

Die erfindungsgemäße Siloxan-Verbindung ist filmbildend und lässt sich aus einem kathodischen Tauchbad gut auf leitfähigen Oberflächen abscheiden.

Aus dem vorstehend beschriebenen Bindemittel lässt sich ein Beschichtungsmittel herstellen. In der Regel geschieht dies durch Herstellen einer wässrigen Lösung oder Dispersion aus dem Bindemittel, wobei der Anteil des Bindemittels bis zu 40 Gewichts-%, vorzugsweise bis zu 30 Gewichts-%, bevorzugt bis zu 20 Gewichts-% beträgt. Der Anteil des Wassers beträgt dementsprechend zwischen 60 Gewichts-% und 80 Gewichts-%. Alternativ können auch lösemittelhaltige Beschichtungsmittel hergestellt werden. Bevorzugt ist der Zusatz von 0,1 Gewichts-% bis 10 Gewichts-% eines Lösungsmittels auch zu einem an sich wässrigen Beschichtungsmittel, um z. B. die Filmbildungseigenschaften zu verbessern.

Dem erfindungsgemäßen Beschichtungsmittel, das die oben beschriebene Siloxan-Verbindung als Bindemittel enthält, sind für die meisten Anwendungen übliche, bekannte Additive wie Netz- und Dispergiermittel, Haftvermittler, Verdicker, Entschäumer und/oder Stabilisatoren eingesetzt sind. Weiter sind dem Beschichtungsmittel häufig organische und/oder anorganische Pigmente oder Farbstoffe zugesetzt. Bei Bedarf können Gleitmittel oder Wachse zugesetzt werden, um z. B. Oberflächeneigenschaften der Beschichtung einzustellen. Es können auch Metallpartikel wie Zink- oder Aluminiumpartikel zugesetzt sein, die das kathodische Abscheiden des Binde- bzw. Beschichtungsmittels unterstützten; erforderlich sind solche Metallpartikel jedoch nicht. Sie können aber antikorrosiv wirken.

Die Erfindung umfasst weiter ein Verfahren zum kathodischen Beschichten von Werkstücken mit leitfähiger Oberfläche mit folgenden Schritten: das Bereitstellen eines Bades enthaltend das flüssige Binde- oder Beschichtungsmittel in wasserverdünnter, neutralisierter Form sowie von Elektroden, hier Anoden, die ein elektrochemisches Abscheiden von Binde- oder Beschichtungsmittel auf der Oberfläche des Werkstücks erlauben, das Einbringen von zu beschichtenden Werkstücken in das Bad, das Schalten der Werkstücke als Kathode, das Anlegen einer Spannung und das Entfernen der Werkstücke aus dem Tauchbad nach Abscheiden der Beschichtung. Nach dem Beschichten wird die erfindungsgemäße Siloxan-Beschichtung bei erhöhter Temperatur ausgehärtet.

Übliche Bedingungen für das Beschichten nach dem erfindungsgemäßen Verfahren setzen eine an die Elektroden angelegte Spannung von 100V bis 200V voraus. Das Abscheiden der Schicht auf dem Werkstück dauert nur wenige Minuten, es werden nur selten 30 Minuten oder mehr erforderlich sein; in den meisten Fällen reicht eine Beschichtungsdauer von 1 Minute. Die Badtemperatur liegt im Allgemeinen bei Raumtemperatur oder geringfügig darüber, üblich sind Temperaturen von 25°C bis 30°C. Es ist also in der Regel nicht erforderlich zu heizen oder zu kühlen; die Badtemperatur, die sich in normaltemperierten Räumen während des Beschichtens einstellt, ist zum Beschichten geeignet. Die so abgeschiedene Schicht wird ausgehärtet bei erhöhter Temperatur. Übliche Bedingungen für das Aushärten in einem Konvektions- oder Umluftofen: 30 Minuten bei 150°C Verweiltemperatur. Beschichtungszeit und Beschichtungstemperaturen richten sich nach der zu erzeugenden Schichtdicke und u. a. dem Beschichtungsmittel sowie der anliegenden Spannung.

Ein erfindungsgemäß beschichtetes Werkstück kann neben der vorstehend beschriebenen Beschichtung weitere Beschichtungen aufweisen, beispielsweise einen antikorrosiv wirkenden, stark metallpartikelhaltigen Basecoat oder eine Beschichtung, mit der die Oberfläche eines nicht-metallischen Werkstücks leitfähig gestaltet wird und auf der dann die erfindungsgemäße Beschichtung abgeschieden und zu einem Trockenfilm ausgehärtet wird.

Wesentliche Details der Erfindung werden an einem Ausführungsbeispiel näher erläutert:

| | |
|---|---|
| 0,14 mol | Methyltriethoxysilan |
| 0,05 mol | Phenyltriethoxysilan |
| 0,10 mol | Dimethyldiethoxysilan und |
| 0,10 mol | Diphenyldiethoxysilan sowie |
| 0,05 mol | eines Addukts aus 3 Gylcidyloxypropyltrialkoxysilan (Handelsname z. B.: GLYEO) und N-Methylethanolamin |

werden nacheinander in einen Reaktor aus Glas, der mit einem Rückflusskühler ausgestattet ist, hineingegeben. Über einen Zeitraum von 30 Minuten gleichmäßig verteilt werden 1,3 mol Wasser zugegeben. Dies entspricht einem Molverhältnis von Wasser zu Alkoxyphenylsilan von 1 : 0,12. Der Ansatz wird über 180 Minuten bei Siedetemperatur (74 °C) gekocht. Es bildet sich zunächst ein Feststoff, der sich später wieder auflöst. Es liegt schließlich eine leicht gelbliche Lösung vor.

Diese leicht gelbliche Lösung wird anschließend im leichten Vakuum (160 mbar) in einem auf 40 °C bis 45 °C temperierten Ölbad abdestilliert. Der freigesetzte Dampf weist eine Temperatur von ca. 32 °C auf. Es wird ca. 1 mol Ethanol abdestilliert. Es bildet sich eine trübe, gelbe, honigartige Substanz.

Diese Substanz wird auf Raumtemperatur abgekühlt und mit 0,05 mol Essigsäure neutralisiert. Es bildet sich wieder eine klare, gelbliche Flüssigkeit; dies ist das erfindungsgemäße Bindemittel.

Diese Flüssigkeit ist über mindestens 3 Monate lagerstabil ohne Viskositätszunahme und bei unverändertem Applikationsverhalten. Diese Flüssigkeit (das erfindungsgemäße Bindemittel) lässt sich mit Wasser zu dem erfindungsgemäßen Beschichtungsmittel verdünnen, das z. B. aus 30 Gewichts-% Bindemittel und 70 Gewichts-% Wasser besteht.

Aus dem erfindungsgemäßen Bindemittel wird unter Zusatz von Wasser in einem geeigneten Behälter ein flüssiges Beschichtungsmittel für ein Tauchbad hergestellt. Beschichtet werden Heizkörper, die in das Tauchbad eingetaucht werden. Die Heizkörper sind als Kathode geschaltet, die zu im Tauchbad angeordneten Anoden unter Spannung gesetzt sind. Die Spannung beträgt 110V. Das Tauchbad weist eine Temperatur von 28°C auf. Nachdem während 1 Minute das Beschichtungsmittel auf der Oberfläche des Heizkörpers abgeschieden wurde, wird der Heizkörper aus dem Tauchbad entfernt. Überschüssiges Beschichtungsmittel tropft ab. Die so aufgetragene Beschichtung wird in einem Konvektionsofen getrocknet. Damit bildet sich ein Trockenfilm auf dem Werkstück. Die Dauer der Trocknung beträgt 30 Minuten. Der Konvektionsofen ist auf eine Temperatur von 150°C eingestellt. Die Stärke des Trockenfilms beträgt 15 µm. Die Stärke des Trockenfilms kann je nach zugesetzten Additiven, Pigmenten oder Metallpartikeln variieren. Sie liegt unter 30 µm, bevorzugt beträgt die Stärke des Trockenfilm 5 µm bis 25 µm, vorteilhaft 10 µm bis 20 µm.

## Patentansprüche

1. Verfahren zum Herstellen eines Bindemittels, mit den Schritten:
- Bereitstellen einer Mischung aus mindestens zwei Methylalkoxysilanen, mindestens zwei Phenylalkoxysilanen und mindestens einem Aminosilan, wobei Methylalkoxysilane und Phenylalkoxysilane in einem Molverhältnis von 1,5 : 1 bis 2 : 1 eingesetzt werden und wobei Phenylalkoxysilane und Aminosilan in einem Molverhältnis von 1: 0,20 bis 1: 0,50 eingesetzt werden, und
- Hydrolysieren der Silane unter Zusatz von Wasser in einem Verhältnis von Wasser zu Phenylalkoxysilan von 1 : 0,075 bis 1: 0,15.

2. Verfahren nach Anspruch 1, **dadurch gekennzeichnet, dass** nach dem Hydrolysieren der durch die Hydrolyse entstandene Alkohol entfernt, insbesondere abdestilliert wird.

3. Verfahren nach Anspruch 1 oder 2, **dadurch gekennzeichnet, dass** die hydrolysierten Silane neutralisiert werden, insbesondere durch Zusatz von Säure.

4. Verfahren nach mindestens einem der vorangehenden Ansprüche 1 bis 3, **gekennzeichnet dadurch, dass** das Molverhältnis von Methylalkoxysilanen zu Phenylalkoxysilanen in einem Bereich von 1,5 : 1 bis 1,7: 1 eingestellt wird, bevorzugt in einem Bereich von 1,55 : 1 bis 1,65 : 1.

5. Verfahren nach mindestens einem der vorangehenden Ansprüche 1 bis 4, **dadurch gekennzeichnet, dass** das Molverhältnis von Phenylalkoxysilan zu Aminosilan in einem Bereich von 1: 0,30 bis 1: 0,40 eingestellt wird.

6. Verfahren nach mindestens einem der vorangehenden Ansprüche 1 bis 5, **dadurch gekennzeichnet, dass** das Molverhältnis von Wasser zu Phenylalkoxysilan in einem Bereich von 1: 0,105 bis 1: 0,125 eingestellt wird, bevorzugt in einem Bereich von 1 : 0,110 bis 1 : 0,120.

7. Verfahren nach mindestens einem der vorangehenden Ansprüche 1 bis 6, **dadurch gekennzeichnet, dass** das Wasser den gemischten Silanen über einen Zeitraum von 5 Minuten bis 60 Minuten gleichmäßig verteilt zugesetzt wird.

8. Verfahren nach mindestens einem der vorangehenden Ansprüche 1 bis 7, **dadurch gekennzeichnet, dass** Silane und Wasser nach Zugabe des Wassers mindestens 60 Minuten, bevorzugt mindestens 120 Minuten, besonders bevorzugt mindestens 150 Minuten, vorteilhaft mindestens 240 Minuten sieden.

9. Bindemittel aus einer hydrolysierten Mischung von mindestens zwei Methylalkoxysilanen, mindestens zwei Phenylalkoxysilanen und mindestens einem Aminosilan, wobei Methylalkoxysilane und Phenylalkoxysilane in einem Molverhältnis von 1,5 : 1 bis 2 : 1 eingesetzt sind und wobei Phenylalkoxysilane und Aminosilan in einem Molverhältnis von 1 : 0,20 bis 1 : 0,50 eingesetzt sind.

10. Beschichtungsmittel, hergestellt aus einem Bindemittel nach Anspruch 9, **dadurch gekennzeichnet, dass** der Anteil des Bindemittels bis zu 40 Gewichts-%, vorzugsweise bis zu 30 Gewichts-%, bevorzugt bis zu 20 Gewichts-% beträgt, und dass das Bindemittel in wässriger oder organischer Lösung vorliegt.

11. Beschichtungsmittel nach Anspruch 10 **dadurch gekennzeichnet, dass** Additive wie Netzmittel, Dispergiermittel, Haftvermittler, Verdicker, Entschäumer und/oder Stabilisatoren eingesetzt sind oder dass dem Bindemittel organische und/oder anorganische Pigmente, Farbstoffe, Wachse oder Gleitmittel zugesetzt sind.

12. Verfahren zum Beschichten eines Werkstücks mit leitfähiger Oberfläche mit einem Bindemittel nach mindestens einem der Ansprüche 1 bis 3 oder mit einem Beschichtungsmittel nach mindestens einem der Ansprüche 10 oder 11 mit den Schritten:
- Bereitstellen eines Bades enthaltend das Binde- oder Beschichtungsmittel sowie von Elektroden, die ein elektrochemisches Abscheiden von Binde- oder Beschichtungsmittel auf der Oberfläche des Werkstücks erlauben,
- Anlegen einer Spannung von 100 V bis 200 V und
- Entfernen der Werkstücke aus dem Tauchbad nach Abscheiden der Beschichtung.

13. Werkstück, überzogen mit einem Trockenfilm aus einem Bindemittel nach Anspruch 9 oder aus einem Beschichtungsmittel nach einem der Ansprüche 10 bis 11.

14. Werkstück nach Anspruch 13, **dadurch gekennzeichnet, dass** der Trockenfilm eine Dicke von <30 µm, bevorzugt 5 µm-25 µm, vorteilhaft 10 µm bis 20 µm, aufweist.

## Claims

1. A method for producing a binder comprising the steps:
- Preparation of a mixture consisting of at least two methylalkoxysilanes, at least two phenylalkoxysilanes and at least one aminosilane, wherein the methylalkoxysilanes and phenylalkoxysilanes are used at a molar ratio of 1.5 : 1 to 2 : 1, and wherein the phenylalkoxysilanes and aminosilane are used at a molar ratio of 1 : 0.20 to 1 : 0.50, and
- hydrolysation of the silanes by adding water at a ratio of water to phenylalkoxysilane of 1 : 0.075 to 1 : 0.15.

2. The method according to claim 1, **characterized in that** after the hydrolysation the alcohol arising from the hydrolysis is removed, and in particular distilled off.

3. The method according to claim 1 or 2, **characterized in that** the hydrolyzed silanes are neutralized, especially by adding acid.

4. The method according to at least one of the preceding claims 1 to 3, **characterized in that** the molar ratio of methylalkoxysilanes to phenylalkoxysilanes is adjusted within a range of 1.5 : 1 to 1.7 : 1 and preferably within a range of 1.55 : 1 to 1.65 : 1.

5. The method according to one of the preceding claims 1 to 4, **characterized in that** the molar ratio of phenylalkoxysilane to aminosilane is adjusted within a range of 1 : 0.30 to 1 : 0.40.

6. The method according to at least one of the preceding claims 1 to 5, **characterized in that** the molar ratio of water to phenylalkoxysilane is adjusted within a range of 1 : 0.105 to 1 : 0.125, and preferably within a range of 1 : 0.110 to 1 : 0.120.

7. The method according to at least one of the preceding claims 1 to 6, **characterized in that** the water is added to the mixed silanes evenly distributed over a period of 5 minutes to 60 minutes.

8. The method according to least one of the preceding claims 1 to 7, **characterized in that** the silanes and water are boiled for least 60 minutes, preferably at least 120 minutes, especially preferably at least 150 minutes, and advantageously at least 240 minutes after adding the water.

9. A binder consisting of a hydrolyzed mixture of at least two methylalkoxysilanes, at least two phenylalkoxysilanes and at least one aminosilane, wherein the methylalkoxysilanes and phenylalkoxysilanes are used at a molar ratio of 1.5 : 1 to 2 : 1, and wherein the phenylalkoxysilanes and aminosilane are used at a molar ratio of 1 : 0.20 to 1 : 0.50.

10. A coating agent produced from a binder according to claim 9, **characterized in that** the percentage of the binder is up to 40 weight percent, preferably up to 30 weight percent, preferably up to 20 weight percent, and that the binder is present in an aqueous or organic solution.

11. The coating agent according to claim 10, **characterized in that** additives such as wetting agents, dispersants, adhesion promoters, thickeners, defoamers and/or stabilizers are used, or organic and/or inorganic pigments, dies, waxes or lubricants are added to the binder.

12. A method for coating a workpiece having a conductive surface with a binder according to at least one of claims 1 to 3, or with a coating agent according to at least one of claims 10 or 11 comprising the steps:
- preparation of a bath containing the binder or coating agent as well as electrodes that allow electrochemical deposition of the binder or coating agent on the surface of the workpiece,
- application of a voltage of 100 V to 200 V, and
- removal of the workpieces from the immersion bath after depositing the coating.

13. A workpiece coated with a dry film consisting of a binder according to claim 9 or a coating agent according to one of claims 10 to 11.

14. The workpiece according to claim 13, **characterized in that** the dry film has a thickness of <30 µm, preferably 5 µm - 25 µm, advantageously 10 µm - 20 µm.

## Revendications

1. Procédé de fabrication d'un liant, comprenant les étapes suivantes :
- préparation d'un mélange composé d'au moins deux méthylalcoxysilanes, d'au moins deux phénylalcoxysilanes et d'au moins un aminosilane, les méthylalcoxysilanes et les phénylalcoxysilanes étant utilisés dans un rapport molaire de 1,5 : 1 à 2 : 1, et les phénylalcoxysilanes et l'aminosilane étant utilisés dans un rapport molaire de 1 : 0,20 à 1 : 0,50, et
- réalisation de l'hydrolyse des silanes avec ajout d'eau dans un rapport eau : phénylalcoxysilane de 1 : 0,075 à 1 : 0,15.

2. Procédé selon la revendication 1, **caractérisé en ce que**, après la réalisation de l'hydrolyse, l'alcool produit par l'hydrolyse est éliminé, en particulier il est éliminé par distillation.

3. Procédé selon la revendication 1 ou 2, **caractérisé en ce que** les silanes hydrolysés sont neutralisés, en particulier par l'ajout d'acide.

4. Procédé selon au moins une des revendications précédentes 1 à 3, **caractérisé en ce que** le rapport molaire des méthylalcoxysilanes aux phénylalcoxysilanes est réglé dans une plage de 1,5 : 1 à 1,7 : 1, de préférence dans une plage de 1,55 : 1 à 1,65 : 1.

5. Procédé selon au moins une des revendications précédentes 1 à 4, **caractérisé en ce que** le rapport molaire du phénylalcoxysilane à l'aminosilane est réglé dans une plage de 1 : 0,30 à 1 : 0,40.

6. Procédé selon au moins une des revendications précédentes 1 à 5, **caractérisé en ce que** le rapport molaire de l'eau au phénylalcoxysilane est réglé dans une plage de 1 : 0,105 à 1 : 0,125, de préférence dans une plage de 1 : 0,110 à 1 : 0,120.

7. Procédé selon au moins une des revendications précédentes 1 à 6, **caractérisé en ce que** l'eau est ajoutée aux silanes mélangés, de façon régulièrement répartie, pendant une période de 5 minutes à 60 minutes.

8. Procédé selon au moins une des revendications précédentes 1 à 7, **caractérisé en ce que** les silanes et l'eau, après l'ajout de l'eau, sont en ébullition pendant au moins 60 minutes, de préférence pendant au moins 120 minutes, de façon particulièrement préférée pendant au moins 150 minutes, avantageusement pendant au moins 240 minutes.

9. Liant à partir d'un mélange hydrolysé composé d'au moins deux méthylalcoxysilanes, d'au moins deux phénylalcoxysilanes et d'au moins un aminosilane, les méthylalcoxysilanes et les phénylalcoxysilanes étant utilisés dans un rapport molaire de 1,5 : 1 à 2 : 1, et les phénylalcoxysilanes et l'aminosilane étant utilisés dans un rapport molaire de 1 : 0,20 à 1 : 0,50.

10. Moyen de revêtement, réalisé à partir d'un liant selon la revendication 9, **caractérisé en ce que** la proportion du liant représente jusqu'à 40 %-poids, de façon préférée jusqu'à 30 %-poids, de préférence jusqu'à 20 %-poids, et **en ce que** le liant se présente sous forme de solution aqueuse ou organique.

11. Moyen de revêtement selon la revendication 10, **caractérisé en ce que** des additifs tels que des agents mouillants, des agents dispersants, des promoteurs d'adhérence, des agents épaississants, des agents antimoussants et/ou des stabilisateurs sont utilisés ou **en ce que** des pigments, colorants, cires ou lubrifiants organiques et/ou inorganiques sont ajoutés au liant.

12. Procédé de revêtement d'une pièce ayant une surface conductrice avec un liant selon au moins une des revendications 1 à 3 ou avec un moyen de revêtement selon au moins une des revendications 10 ou 11, comprenant les étapes suivantes :
- préparation d'un bain contenant le liant ou le moyen de revêtement ainsi que d'électrodes qui permettent une précipitation électrochimique du liant ou du moyen de revêtement sur la surface de la pièce,
- application d'une tension de 100 V à 200 V, et
- extraction des pièces hors du bain d'immersion après précipitation du revêtement.

13. Pièce, revêtue d'un film sec à partir d'un liant selon la revendication 9 ou à partir d'un moyen de revêtement selon une des revendications 10 à 11.

14. Pièce selon la revendication 13, **caractérisée en ce que** le film sec présente une épaisseur de <30 µm, de préférence de 5 µm-25 µm, avantageusement de 10 µm à 20 µm.
